# FASCICULE DE BREVET EUROPEEN

(11) **EP 4 187 231 B1**
(45) Date de publication et mention de la délivrance du brevet: **24.01.2024**
(21) Numéro de dépôt: 22209569.7
(22) Date de dépôt: 25.11.2022
(51) Int. Cl.: G01N 21/17

(54) **DISPOSITIF DE DÉTECTION PHOTOACOUSTIQUE COMPACT**
KOMPAKTE PHOTOAKUSTISCHE DETEKTIONSVORRICHTUNG
COMPACT PHOTOACOUSTIC DETECTION DEVICE

(30) Priorité: 28.11.2021 FR 2112618
(43) Date de publication de la demande: 31.05.2023
(73) Titulaire: Commissariat à l'énergie atomique et aux énergies alternatives, 75015 Paris (FR)
(72) Inventeur: OLLIER, Emmanuel, 38054 GRENOBLE Cedex 9 (FR); DURAFFOURG, Laurent, 38054 GRENOBLE (FR); COUTIER, Caroline, 38054 GRENOBLE Cedex 9 (FR); VERDOT, Thierry, 38054 GRENOBLE Cedex 9 (FR)
(74) Mandataire: INNOV-GROUP

(56) Documents cités:
- FR-A1- 2 974 413
- FIREBAUGH SAMARA L ET AL: "Miniaturization and integration of photoacoustic detection", JOURNAL OF APPLIED PHYSICS, AMERICAN INSTITUTE OF PHYSICS, 2 HUNTINGTON QUADRANGLE, MELVILLE, NY 11747, vol. 92, no. 3, août 2002 (2002-08), pages 1555-1563, XP012056999, ISSN: 0021-8979, DOI: 10.1063/1.1489493

## Description

### DOMAINE TECHNIQUE

Le domaine technique de l'invention est un dispositif de détection par effet photoacoustique.

### ART ANTERIEUR

La détection photoacoustique permet une détection d'une faible concentration d'une espèce gazeuse, présente dans un gaz ou mélange de gaz, à l'état de traces. Le principe de fonctionnement repose sur une illumination périodique du gaz à une longueur d'onde correspondant à une bande spectrale d'absorption de l'espèce gazeuse recherchée. L'illumination peut être impulsionnelle ou de façon plus générale, modulée en amplitude, selon une période déterminée. L'illumination conduit à un échauffement périodique du gaz, ce dernier générant une onde de pression. L'onde de pression est détectée par un capteur acoustique. Ainsi, la détection de l'onde acoustique permet de quantifier une concentration de l'espèce gazeuse dans le gaz analysé. La détection photoacoustique permet la conception de capteurs de gaz pour des utilisations dans le domaine industriel ou le médical.

Généralement, l'illumination est effectuée dans une longueur d'onde dans le domaine du proche ou moyen infra-rouge, typiquement entre 0.8 µm et 12 µm. Ces longueurs d'onde correspondent à des absorptions vibrationnelles (pures ou composées) de liaisons chimiques spécifiques contenues dans la ou les molécules de gaz (par exemple : C-H, C-O, N-H, S-O, C-C, C-F...). Des longueurs d'onde visibles ou ultra-violettes sont aussi utilisées pour des gaz qui n'ont pas de réponse spectrale efficace dans la gamme infrarouge (on utilisera par exemple l'ozone dont l'absorption la plus forte se trouve en bande UV-C autour de 0.25µm).

L'illumination est modulée en amplitude selon une fréquence de modulation généralement comprise entre 100 Hz et 50 kHz. L'illumination peut être faire l'objet d'un balayage en longueur d'onde, ce qui permet d'adresser successivement différentes espèces gazeuses.

La miniaturisation des capteurs acoustiques permet d'obtenir des dispositifs de détection photoacoustiques compacts et sensibles.

FR 2 974 413 A1 divulgue un dispositif de détection photoacoustique comprenant une source lumineuse intégrée dans le dispositif.

Firebaugh S. L. et al, J. Appl.Phys. 92, 1555-1563 (2002), divulgue un détecteur photoacoustique microfabriqué avec une cellule microfabriquée montée sur une plaque de base.

Un objectif de l'invention décrite ci-après est d'obtenir un dispositif de détection, par effet photoacoustique, dont l'encombrement est réduit et permettant une intégration optimale des composants formant le dispositif, en particulier la source de lumière produisant l'illumination.

### EXPOSE DE L'INVENTION

Un premier objet de l'invention est un dispositif de détection photoacoustique, comportant :
- une source de lumière, configurée pour émettre un faisceau de lumière autour d'un axe d'illumination ;
- une cavité, destinée à recevoir un gaz ;
- un détecteur, configuré pour détecter une onde acoustique se propageant à travers la cavité ;
le dispositif comportant un substrat, s'étendant entre une face inférieure et une face supérieure, le substrat étant tel que :
- la cavité est ménagée dans le substrat, entre la face inférieure et la face supérieure ;
- une tranchée est ménagée dans le substrat, délimitée par la face supérieure, la source de lumière étant insérée dans la tranchée, sur la face supérieure, la face supérieure s'étendant ainsi entre la cavité et la source de lumière;
- le substrat comporte une portion d'illumination, délimitant la tranchée, disposée face à la source de lumière, la portion d'illumination s'étendant entre :
   - une face proximale, ménagée sur la face supérieure, disposée en regard de la source de lumière ;
   - et une face distale, ménagée sur la face supérieure, la face distale formant un réflecteur configuré pour réfléchir la lumière vers la cavité ;
de telle sorte que le faisceau de lumière, émis par la source de lumière, se propage, à travers la portion d'illumination, entre la face proximale et la face distale, avant d'être réfléchi, par la face distale, vers la cavité.

Selon une possibilité, la face distale comporte une couche réfléchissante, formant le réflecteur. Selon une possibilité, une couche anti-reflet est déposée sur la face proximale.

Selon un mode de réalisation,
- la face proximale s'étend perpendiculairement à un axe normal proximal ;
- l'axe d'illumination est incliné par rapport à l'axe normal proximal.

L'axe d'illumination peut être incliné par rapport à l'axe normal proximal, d'un angle d'inclinaison compris entre 50° et 60° ou compris entre 3° et 10°.

Selon un mode de réalisation,
- la face distale s'étend perpendiculairement à un axe normal distal;
- l'axe normal distal est sécant de l'axe normal proximal.

Selon un mode de réalisation,
- la tranchée s'étend jusqu'à un fond ;
- l'axe d'illumination est parallèle, ou sensiblement parallèle, au fond de la tranchée.

Selon un mode de réalisation, la face distale d'étend parallèlement, ou sensiblement parallèlement, à l'axe d'illumination.

Selon un mode de réalisation :
- le substrat comporte une tranchée auxiliaire, délimitée par la face supérieure;
- la face distale délimite la tranchée auxiliaire ;
- la portion d'illumination s'étend entre la tranchée et la tranchée auxiliaire.

La tranchée et la tranchée auxiliaire sont alors décalées l'une par rapport à l'autre selon l'axe d'illumination.

Selon une possibilité :
- la cavité est délimitée par une face interne ;
- la face interne comporte une portion d'admission, destinée à une admission du faisceau de lumière se propageant vers la cavité à partir de la face distale ;
- la face interne comporte une couche réfléchissante, en dehors de la portion d'admission.

La portion d'admission peut correspondre à une intersection entre le faisceau de lumière et la face interne.

Le détecteur est de préférence disposé en contact fluidique avec la cavité, entre la face inférieure et la face supérieure.

La cavité peut être reliée à au moins un canal fluidique, s'étendant à travers le substrat, pour permettre le remplissage de la cavité par le gaz, et/ou l'évacuation du gaz.

De préférence, la source de lumière émet dans une bande spectrale d'émission, dans le domaine infra-rouge, le substrat étant formé d'un matériau présentant une transmittance dans la bande spectrale d'émission, telle qu'au moins 10% de la puissance lumineuse du faisceau de lumière, émis par la source, atteint la cavité après s'être propagée de la face proximale vers la face distale puis de la face distale vers la cavité.

Un autre objet de l'invention est un procédé d'analyse d'un gaz à l'aide d'un dispositif selon le premier objet de l'invention, le procédé comportant :
a) admission du gaz dans la cavité ;
b) activation de la source de lumière, de telle sorte que la source de lumière émet un faisceau de lumière périodiquement modulé en amplitude ;
c) détection, par le détecteur, d'une variation périodique d'une pression, générée dans la cavité par effet photoacoustique ;
le procédé étant tel que le faisceau de lumière, émis par la source de lumière, se propage, à travers le substrat :
- de la face proximale vers la face distale de la portion d'illumination ;
- puis de la face distale vers la cavité.

L'invention sera mieux comprise à la lecture de l'exposé des exemples de réalisation présentés, dans la suite de la description, en lien avec les figures listées ci-dessous.

### FIGURES

La figure 1A est une vue en coupe d'un premier exemple de dispositif, dans un plan transversal P_{ZX}, parallèle à un axe transversal Z et à un axe longitudinal X.
La figure 1B est une vue de dessus du dispositif schématisé sur la figure 1A, parallèlement à un plan P_{YX}, perpendiculaire à l'axe transversal Z.
La figure 1C est une vue en coupe du dispositif schématisé sur la figure 1A, dans un plan de coupe parallèle au plan P_{YX} et passant par la cavité.
La figure 1D est une vue de détail d'une portion du substrat, dite portion d'illumination, à travers laquelle la lumière émise par la source se propage. La figure 1D est une vue en coupe selon le plan transversal Pzx.
La figure 1E est une vue en coupe de la cavité, selon le plan transversal P_{ZX}.
La figure 1F est une vue en coupe, selon le plan transversal P_{ZX}, de la portion d'illumination.
Les figures 2A et 2B représentent les indices optiques réels (courbes a) et imaginaires (courbes b) du silicium monocristallin et du nitrure de silicium respectivement.
La figure 3A représente l'angle, dit de Brewster en fonction de la longueur d'onde, d'une couche antireflet de nitrure de silicium déposée sur une lame de silicium. Cet angle est défini par le rayon incident sur la couche de nitrure de silicium et la normale à cette couche, pour lequel la réflexion de la lumière est minimale.
La figure 3B représente une intensité de la lumière réfléchie par une couche de nitrure de silicium, en fonction de l'angle d'incidence (axe des abscisses unités °) et de l'épaisseur de la couche (axe des ordonnées - µm), pour une longueur d'onde de 7.7µm.
La figure 3C représente, l'angle réfracté dans une lame de silicium, en fonction de la longueur d'onde (axe des abscisses - µm), lorsque l'angle d'incidence au dioptre d'entrée correspond à l'angle de Brewster.
Les figures 4A et 4B montrent la forme d'un faisceau de lumière laser émis au contact et à une distance de 600 µm d'une source laser de type QCL (Quantum Cascade Laser).
Les figures 5A à 5C illustrent un deuxième exemple de réalisation.

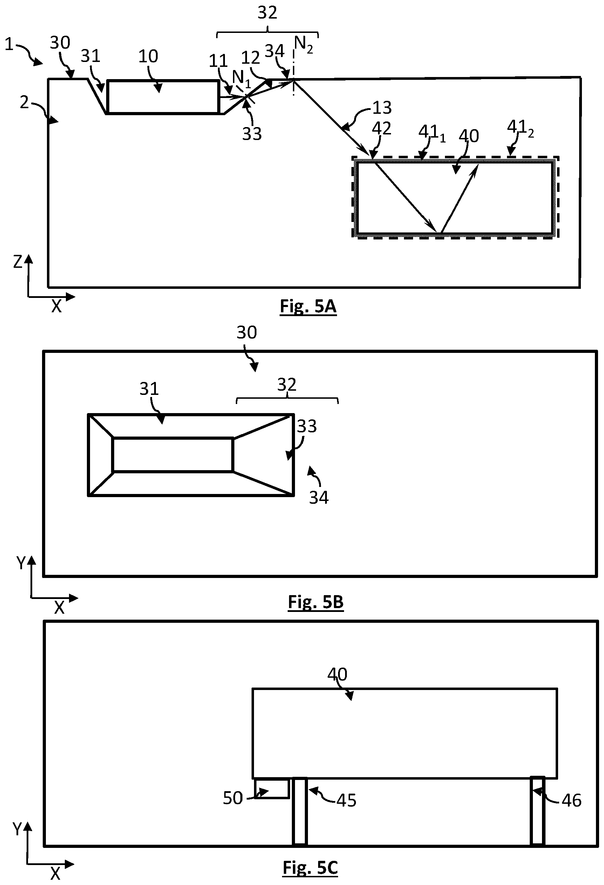

La figure 5A est une vue en coupe du deuxième exemple de dispositif, dans le plan transversal Pzx.
La figure 5B est une vue de dessus du dispositif schématisé sur la figure 5A, parallèlement au plan P_{YX}.
La figure 5C est une vue en coupe du dispositif schématisé sur la figure 5A, dans un plan de coupe parallèle au plan P_{YX} et passant par la cavité.

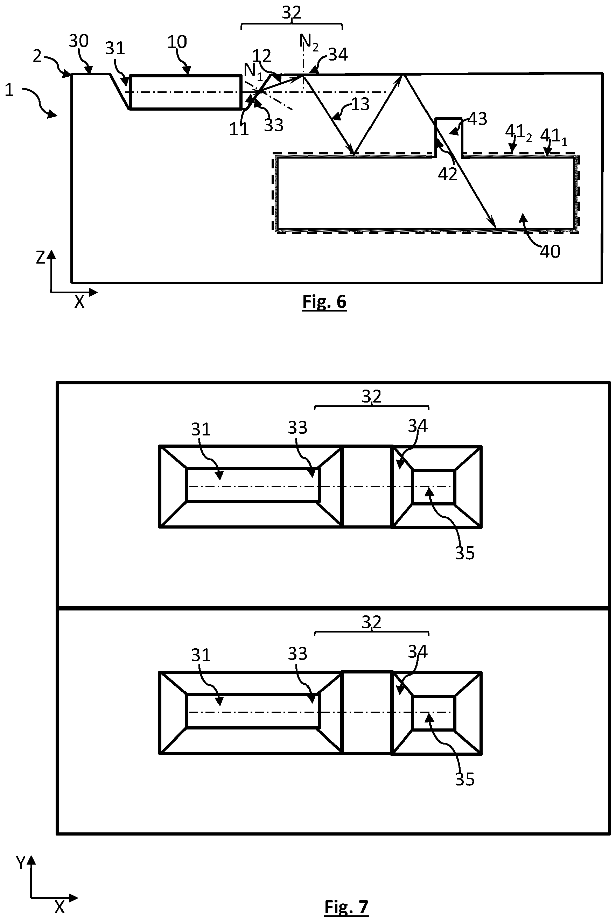

La figure 6 illustre un troisième mode de réalisation. La figure 6 est une vue en coupe dans le plan transversal Pzx.
La figure 7 illustre la fabrication de deux substrats adjacents.

### EXPOSE DE MODES DE REALISATION PARTICULIERS

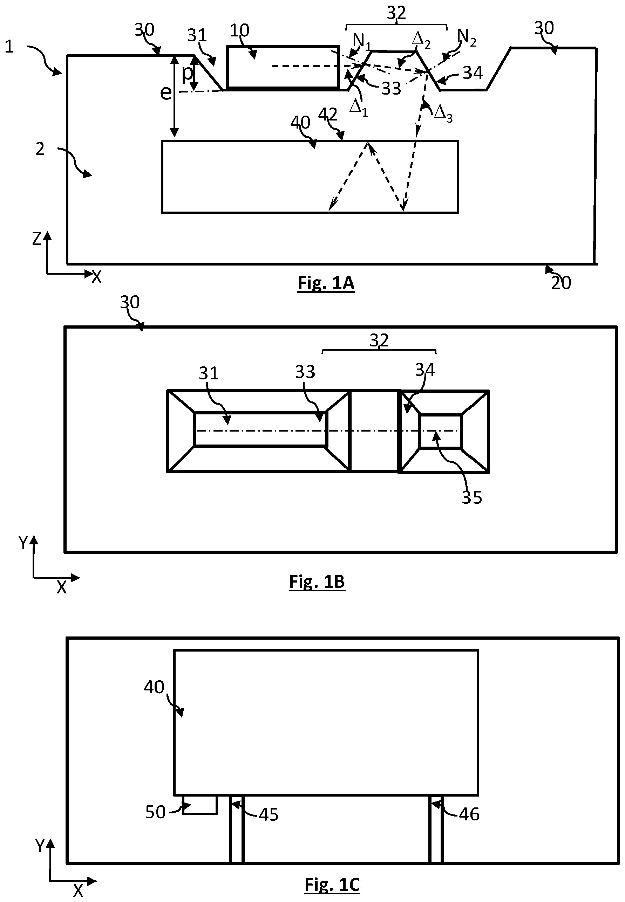

Les figures 1A à 1F schématisent un premier exemple de réalisation d'un dispositif d'analyse par détection photo-acoustique selon l'invention. Le dispositif comporte un substrat 2 s'étendant, le long d'un axe transversal Z, entre une face inférieure 20 et une face supérieure 30. Le substrat 2 comporte une cavité 40, destinée à recevoir un échantillon à analyser, et notamment un échantillon de gaz. La cavité 40 s'étend entre la face inférieure 20 et la face supérieure 30, selon un axe transversal Z.

La figure 1A est une vue en coupe du dispositif, dans un plan transversal P_{ZX}, parallèle à l'axe transversal Z et à un axe longitudinal X. La figure 1B est une vue de dessus du dispositif, parallèlement à un plan P_{YX}, perpendiculaire à l'axe transversal Z, et parallèle à l'axe longitudinal X et à un axe latéral Y. La figure 1C est une vue en coupe du dispositif, dans un plan de coupe parallèle au plan P_{YX} et passant par la cavité 40.

La cavité 40 est reliée à des orifices 45, 46, ménagés dans le substrat 2, permettant l'admission et l'évacuation du gaz à analyser.

Le dispositif 1 comporte une source de lumière 10, disposée sur la face supérieure 30. La source de lumière 10 est configurée pour émettre un faisceau de lumière 11, dont la longueur d'onde correspond à une longueur d'onde d'absorption d'une espèce gazeuse à analyser. La longueur d'onde d'absorption se situe classiquement dans le domaine du proche ou moyen infra-rouge, typiquement entre 0.8 µm et 12 µm. La source de lumière 10 peut être un laser QCL impulsionnel haute fréquence typiquement, 100kHz à 1MHz. Les impulsions peuvent être modulées en amplitude selon une enveloppe basse fréquence, selon en fonction de la fréquence acoustique souhaitée. Il peut s'agir d'une fréquence de résonance de la cavité 40 ou d'un détecteur acoustique 50 décrit par la suite. La source de lumière peut être une diode laser modulée en amplitude.

La source de lumière 10 émet le faisceau de lumière 11 s'étendant autour d'un axe d'illumination Δ₁. De préférence, l'axe d'illumination Δ₁ s'étend parallèlement, ou sensiblement parallèlement, au plan P_{XY}. Par sensiblement parallèlement, on entend parallèlement en prenant en compte une tolérance angulaire de ± 20° ou ± 10°. La source de lumière 10 est de préférence une source laser. La source de lumière émet le faisceau de lumière 11 dans une bande spectrale d'émission comprise entre 0.8 µm et 12 µm. La source de lumière peut notamment être une source de lumière laser.

Le substrat 2 est réalisé dans un matériau présentant une transmission élevée de la lumière dans la bande spectrale d'émission de la source de lumière. Il peut s'agir de silicium monocristallin (Si), de Germanium (Ge) d'un alliage SiGe ou de chalcogénures de type TeGe, TeGeSe ou tout autre matériau transparent au rayonnement émis par la source de lumière 10.

La cavité 40 comporte ou est reliée à un détecteur acoustique 50, ce dernier étant configuré pour mesurer une variation de pression s'établissant dans la cavité 40, par effet photoacoustique. La variation de pression résulte d'un échauffement de molécules d'une espèce gazeuse sous l'effet d'une illumination par le faisceau de lumière émis par la source de lumière laser, à la longueur d'onde d'absorption de l'espèce gazeuse considérée. Le détecteur acoustique 50 peut être de type microphone, ou un micro-résonateur électromécanique. Ainsi, le détecteur acoustique 50 est confiné dans le substrat 2, à l'intérieur de la cavité 40 ou en communication fluidique avec la cavité. Cela favorise la compacité du dispositif.

Dans l'exemple représenté, le substrat 2 est obtenu par l'assemblage d'une base et d'un capot. La base s'étend entre la face inférieure 20 et la cavité 40. Le capot s'étend entre la cavité 40 et la face supérieure 30. La cavité 40 est fermée suite à un assemblage du capot sur la base. Préalablement à l'assemblage, tout ou partie de la cavité est ménagée sur la base et/ou sur le capot.

Un aspect important de l'invention est que la source de lumière 10 est placée sur la face supérieure 30 du substrat. Ainsi, la source de lumière est à l'extérieur du substrat, en dessus de la cavité. Cela permet de minimiser la surface occupée par le dispositif dans un plan P_{XY} perpendiculaire à l'axe transversal Z. A cette fin, une tranchée 31 est ménagée au niveau de la face supérieure 30. La source de lumière 10 est disposée dans la tranchée. Ainsi, le substrat 2, qui contient la cavité, fait office de support de la source de lumière 10.

La tranchée 31 s'étend, parallèlement à l'axe Z, jusqu'à un fond de tranchée. La source de lumière 10 repose face ou sur le fond de la tranchée. De préférence, l'axe d'illumination Δ₁ est parallèle ou sensiblement parallèle au fond de la tranchée 31. Le fond de tranchée s'étend de préférence perpendiculairement (ou sensiblement perpendiculairement) à l'axe transversal Z. Ainsi, l'axe d'illumination Δ₁ est perpendiculaire, ou sensiblement perpendiculaire, à l'axe transversal Z.

La source de lumière 10 peut être disposée sur la tranchée selon un procédé d'assemblage de type « Die to Wafer » (puce à plaque) réalisé par exemple par un équipement de « pick-and-place », (saisie - placement) le substrat étant formé sur une plaque qui comporte un grand nombre de substrats adjacents. La plaque (wafer) consiste en une pluralité de substrats identiques, adjacents les uns des autres, chaque substrat étant destiné à former un dispositif 1. Les substrats sont séparés les uns des autres après l'assemblage d'une source de lumière sur chaque substrat, de façon à obtenir simultanément une pluralité de dispositifs.

La profondeur p de la tranchée, selon l'axe transversal Z, est telle que lorsque la source de lumière 10 est placée dans la tranchée 31, l'axe d'illumination Δ₁ croise une portion d'illumination 32 du substrat, s'étendant entre la face supérieure 30 et la cavité 40.

Un aspect notable de l'invention est que le faisceau de lumière émis 11 par la source de lumière 10 est replié en direction de la cavité 40 en se propageant à travers le substrat 2, en combinant des effets de réfraction et/ou réflexion. On évite ainsi le recours à des guides de lumière, interposés entre la source de lumière 10 et la cavité 40. ces derniers nécessitent généralement un alignement actif de la source laser par rapport à l'entrée du guide : la source laser émet de la lumière et on positionne celle-ci en optimisant la lumière transmise à travers le guide, au cas par cas. Cela n'est pas compatible avec un objectif d'une production de masse à faible coût.

La portion d'illumination 32 correspond à une partie du substrat 2, délimitant la tranchée 31, illuminée par le faisceau de lumière 11. La portion d'illumination 32 s'étend, le long de l'axe d'illumination, entre une face proximale 33 et une face distale 34. La face proximale 33 et la face distale 34 sont des parties de la face supérieure 30. Le faisceau de lumière pénètre dans la portion d'illumination 32 par la face proximale 33, jusqu'à atteindre la face distale 34. Dans l'exemple représenté sur les figures 1A à 1F, la portion d'illumination 32 résulte de la formation d'une tranchée auxiliaire 35 au niveau de la face supérieure 30 du substrat. Ainsi, selon cette configuration, la portion d'illumination 32 s'étend entre la tranchée 31 et la tranchée auxiliaire 35. La face proximale 33 délimite la tranchée 31. La face distale 34 délimite la tranchée auxiliaire 35. La tranchée 31 et la tranchée auxiliaire 35 sont décalées, l'une de l'autre, parallèlement à l'axe d'illumination Δ₁, ou plus généralement parallèlement à un axe perpendiculaire à l'axe transversal Z.

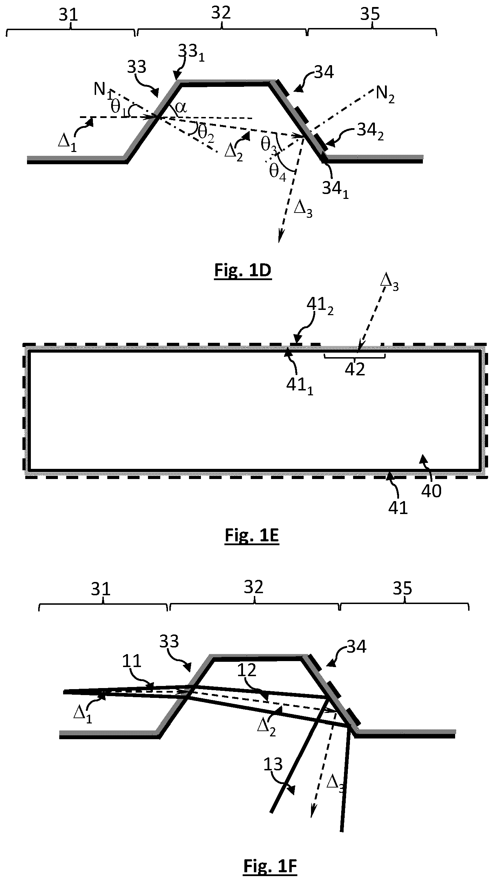

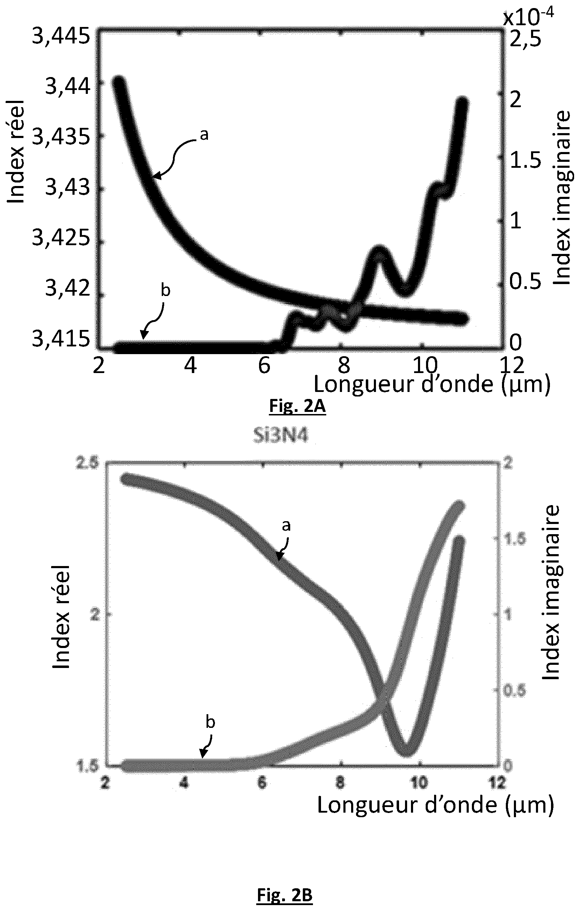

La figure 1D schématise la portion d'illumination 32. La face proximale 33 correspond à la partie de la face supérieure 30 intersectant le faisceau de lumière. La face proximale 33 peut avantageusement comporter une couche d'un matériau antireflet 33₁. Lorsque le substrat 2 est en silicium, la couche antireflet 33₁ peut être formée de Si₃N₄ (Nitrure de silicium). L'indice de réfraction du nitrure de silicium permet une adaptation d'indice entre l'indice de l'air, à l'extérieur du substrat 2, et l'indice du silicium. Les figures 2A et 2B représentent les indices optiques réels (courbes a - axe des ordonnées de gauche) et imaginaires (courbes b - axe des ordonnées de droite) du silicium monocristallin et du nitrure de silicium respectivement. Si₃N₄ présente un indice de réfraction dont la partie réelle est plus faible que celle de Si, et dont la partie imaginaire est du même ordre de grandeur que Si, et cela dans la bande spectrale 2 µm - 11 µm. Sur le figures 2A et 2B, l'axe des abscisses correspond à la longueur d'onde (µm).

La couche antireflet 33₁ peut être formée d'un empilement à partir des matériaux suivants : Si₃N₄, ZnS ou des empilements à base de ZnS (ZnS-Ge, ZnS-Ta₂O₃...). La couche antireflet 33₁ permet d'augmenter la quantité de lumière transmise à travers la face proximale 33.

La face proximale 33 est inclinée par rapport à l'axe d'illumination Δ₁. La face proximale 33 peut être inclinée de telle sorte que l'axe d'illumination Δ₁ est légèrement incliné par rapport à la normale N₁ à la face proximale 33, dite normale proximale. L'angle d'incidence θ₁ formé entre l'axe d'illumination Δ₁ et la normale proximale N₁ peut alors être compris entre 3° et 10°.

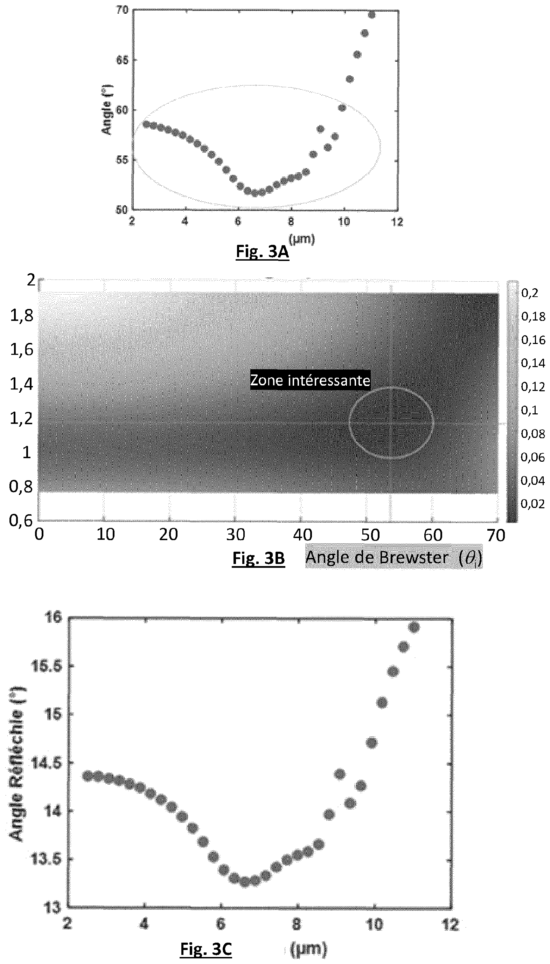

Avantageusement, l'angle d'incidence θ₁ peut correspondre à l'angle de Brewster, ce qui permet de minimiser la réflexion de l'onde lumineuse incidente polarisée en mode TM (Transverse Magnétique). Un tel mode de réalisation convient notamment lorsque la source de lumière est une source laser QCL (Quantum Cascade Laser - Laser à cascade quantique ) car ce type de source laser émet uniquement selon cette polarisation. La figure 3A représente l'angle de Brewster (axe des ordonnées - unité degré) en fonction de la longueur d'onde (axe des abscisses - µm) en prenant en compte une couche antireflet de Si₃N₄ déposée sur un substrat de Si. On observe qu'entre 2 et 10 µm, l'angle de Brewster varie autour de 55°, et est compris entre 50° et 60°. On observe également que l'angle de Brewster varie peu entre les longueurs d'onde de 2 µm et 10 µm.

La figure 3B montre l'intensité de la lumière réfléchie par une couche de Si₃N₄ (niveau de gris) en fonction de l'épaisseur de la couche de Si₃N₄ (axe des ordonnées - µm) et de l'angle d'incidence θ₁ (axe des abscisses - degrés). On observe que l'intensité minimale est obtenue pour des angles θ₁ compris entre 50° et 60°, ce qui correspond à la plage angulaire comportant l'angle de Brewster. Ainsi, la face proximale 33 est de préférence plane, et forme un angle α compris entre 30° et 40° par rapport à l'axe d'illumination Δ₁. Une telle plage angulaire convient à une plage de longueur d'onde étendue, entre 2 µm et 10 µm. L'angle α est représenté sur la figure 1D. Il correspond à π/2-θ₁.

La tranchée 31 est formée dans le substrat, jusqu'à un fond. Le fond s'étend perpendiculairement ou sensiblement perpendiculairement, à l'axe transversal Z. L'axe d'illumination Δ₁ est généralement orienté parallèlement au fond de la tranchée 31. L'angle α correspond à l'inclinaison de la face proximale 33 par rapport au fond de la tranchée 31. Il est possible d'obtenir une telle inclinaison en gravant la tranchée par gravure plasma Cl_{2/}HBr/O₂ ou par gravure chimique de type KOH (hydroxyde de potassium). La gravure chimique KOH permet de réaliser un angle d'inclinaison α=54.74° lorsque le matériau formant le substrat est du silicium d'orientation cristalline [100].

Le faisceau de lumière 11 émis par la source de lumière 10 est réfracté par la face proximale 33 et se propage, sous la forme d'un faisceau réfracté 12, dans la portion d'illumination 32 autour d'un axe de réfraction Δ₂. L'axe de réfraction Δ₂ forme un angle de réfraction θ₂ avec la normale proximale N₁. La figure 3C montre l'angle de réfraction θ₂ (axe des ordonnées, degrés), en fonction de la longueur d'onde (axe des abscisses - µm) lorsque l'angle d'incidence θ₁ est l'angle de Brewster. Les angles d'incidence θ₁ et de réfraction θ₂ sont représentés sur la figure 1D.

La face distale 34 peut comporter une couche réfléchissante 34₂. Il peut par exemple s'agir d'une couche métallique, déposée sur la face supérieure 30. La couche réfléchissante 34₂ peut être en or. La face distale peut également comporter une couche antireflet 34₁.

Le faisceau réfracté 12 se propage à travers la portion d'illumination 32, autour de l'axe de réfraction Δ₂. Il est ensuite réfléchi par la face distale 34, pour former un faisceau réfléchi 13, qui se propage jusqu'à la cavité 40 selon un axe de réflexion Δ₃. Sur la figure 1D, on a représenté l'angle θ₃ entre l'axe de réfraction Δ₂ et la normale distale N₂ (i-e la normale à la face distale 34), ainsi que l'angle θ₄ entre l'axe de réflexion Δ₃ et la normale distale N₂. La face distale 34 est agencée de telle sorte que l'axe de réflexion Δ₃ intersecte la cavité 40.

Ainsi, le faisceau de lumière émis par la source 10 se propage successivement à travers la portion d'illumination 32 entre la face proximale 33 et la face distale 34. Le faisceau de lumière est ensuite réfléchi par la face distale 34 et se propage à travers le substrat jusqu'à la cavité 40.

La figure 1E schématise la cavité 40. La cavité est destinée à être remplie par le gaz à analyser. La cavité est délimitée par une paroi interne 41 faisant l'interface entre la cavité 40 et le substrat 2. La paroi comporte une portion d'admission 42, à travers laquelle se propage tout ou partie du faisceau 13 réfléchi par la face distale 34.

De préférence, la paroi interne 41 de la cavité 40 est recouverte par une couche anti-reflet 41₁, notamment au niveau de la portion d'admission 42. La couche antireflet 41₁ peut être telle que décrite en lien avec la face proximale 33. La paroi interne 41 de la cavité peut également être avantageusement recouverte d'une couche réfléchissante 41₂, sauf au niveau de la portion d'admission 42. La couche réfléchissante 41₂ facilite le confinement et la propagation de la lumière à l'intérieur de la cavité 40, ce qui permet un éclairement plus homogène de la cavité 40. Cela améliore la sensibilité de détection. La couche réfléchissante 41₂ peut être telle que décrite en lien avec la face distale 34. La couche réfléchissante permet également de limiter une propagation du faisceau de lumière, ayant pénétré dans la cavité, à l'extérieur de cette dernière, à travers le substrat. Cela permet de réduire un éventuel bruit acoustique induit par la propagation du faisceau de lumière à travers le substrat.

Les dimensions de la cavité peuvent être ajustées en fonction de la nature du gaz et de la fréquence de travail employée pour moduler l'amplitude de la source de lumière. Ainsi, pour réduire les pertes de chaleur par conduction thermique, la plus petite dimension caractéristique de la cavité excède, de préférence, l'épaisseur d'une couche limite thermique qui se forme au niveau des parois. A titre d'exemple, lorsque le gaz comporte de l'air, et pour une fréquence de modulation d'amplitude de la source de 1000 Hz, l'épaisseur de la couche limite thermique est de l'ordre de 100 µm. Il est alors est recommandé que les dimensions caractéristiques soient supérieures à 200 um.

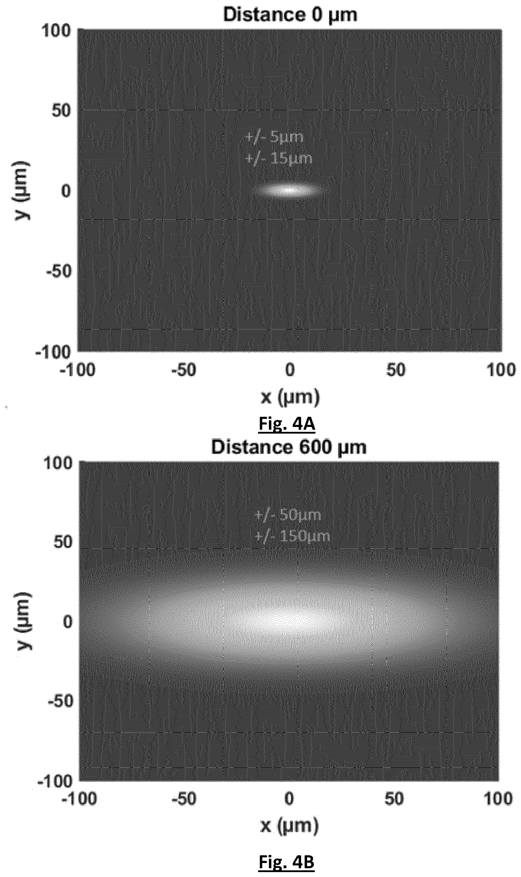

Au cours de la propagation à travers le substrat 2, le faisceau de lumière émis par la source de lumière 10 subit une divergence spatiale, comme représenté sur la figure 1F. Les figures 4A et 4B montrent une image d'un faisceau de lumière émis par une source laser QCL, respectivement à la sortie de la source de lumière et à une distance de 600 µm de cette dernière. Chaque image est formée dans un plan perpendiculaire à l'axe de propagation du faisceau de lumière. Dans un tel plan, le faisceau de lumière prend la forme d'une surface ellipsoïdale, définie par un grand axe et un petit axe. A la sortie de la source de lumière, le grand axe et le petit axe mesurent environ 15 µm et 5 µm respectivement. Le demi-angle de divergence du faisceau de lumière est généralement d'environ 10° selon le petit axe et d'environ 30° selon le grand axe. A 600 µm, le grand axe et le petit axe mesurent environ 150 µm et 50 µm respectivement. Les dimensions de la portion d'admission 42 sont ajustées en fonction de la divergence du faisceau de lumière, de façon à maximiser la quantité de lumière se propageant dans la cavité 40.

Dans la configuration schématisée sur les figures 1A à 1F, on estime que les pourcentages de transmission de la lumière au niveau de la face proximale 33, de la face distale 34 et à travers le substrat 2 sont respectivement de 95%, 65% et 75%. A la longueur d'onde de 7 µm, la puissance lumineuse pénétrant dans la cavité est ainsi d'environ 45% de la puissance lumineuse émise par la source de lumière. Ce pourcentage correspond à une transmittance du substrat entre la face proximale 33 et la cavité 40. Ce calcul a été réalisé en prenant en compte les paramètres suivants :
- angle d'incidence θ₁ angle de Brewster: θ₁=51 ;
- couche antireflet : Si₃N₄ épaisseur 800nm ;
- épaisseur e du substrat entre la face supérieure et la cavité : 200 µm ;
- profondeur p de la tranchée : 100µm
- longueur optique parcourue par le faisceau de lumière dans le substrat : 0.83 mm.

Les figures 5A et 5C schématisent un deuxième mode de réalisation. La figure 5A est une vue en coupe du dispositif, dans un plan transversal Pzx, parallèle à l'axe transversal Z et à l'axe longitudinal X. La figure 5B est une vue de dessus du dispositif, parallèlement à un plan P_{YX}, perpendiculaire à l'axe Z. La figure 5C est une vue en coupe du dispositif, dans un plan de coupe parallèle au plan P_{YX} et passant par la cavité. L'avantage d'une telle configuration, par rapport à la configuration décrite en lien avec les figures 1A à 1F, est qu'elle minimise la longueur optique parcourue par le faisceau de lumière à travers le substrat. Selon ce mode de réalisation, le substrat ne comporte pas de cavité auxiliaire 35. La face distale 34 est orientée parallèlement, ou sensiblement parallèlement, à l'axe d'émission Δ₁. L'épaisseur e entre la face supérieure et la cavité est de préférence comprise entre 50 µm et 200 µm.

La figure 6 schématise une variante du deuxième mode de réalisation, dans laquelle la portion d'admission 42 de la cavité est formée par une excroissance 43 s'étendant à partir de la cavité.

Dans les configurations représentées sur les figures 5A à 5C et 6, le faisceau de lumière pénètre dans la cavité selon un angle moins rasant que dans la configuration représentée sur les figures 1A à 1F. Un tel mode de réalisation est plus simple à mettre en oeuvre.

Comme précédemment indiqué, le substrat peut être formé sur une plaque comportant différents substrats identiques, adjacents les uns des autres, structurés selon un procédé de microfabrication collectif. Une source de lumière peut être assemblée sur la tranchée ménagée dans chaque substrat par un procédé de type « Die to Wafer » (puce à plaque) réalisé par exemple par un équipement de « pick-and-place ». Chaque assemblage permet de former un dispositif de détection. Les dispositifs peuvent être ensuite séparés les uns des autres par découpe de façon à obtenir une pluralité de dispositifs. La figure 7 illustre une fabrication de deux substrats adjacents.

De préférence, le matériau formant le substrat présente une transmittance, à la longueur d'onde d'émission de la source de lumière, telle qu'au moins 10% de la puissance lumineuse du faisceau de lumière atteint la cavité après s'être propagée de la face proximale vers la face distale puis de la face distale vers la cavité.

Quelle que soit la configuration, l'invention permet de minimiser la surface occupée par le dispositif dans un plan P_{XY} perpendiculaire à l'axe transversal. Le dispositif forme un empilement, la source et la cavité étant distantes l'une de l'autre selon l'axe transversal. Il en résulte un dispositif particulièrement compact.

Comme préalablement indiqué, l'invention permet un couplage optique entre la source de lumière et la cavité sans recours à un guide de lumière et les contraintes d'alignement associées. Le couplage optique est réalisé par la structuration du substrat, en particulier l'orientation des faces proximale et distale précédemment décrites. II en résulte une meilleure reproductibilité des performances entre deux dispositifs différents.

## Revendications

1. Dispositif de détection photoacoustique (1), comportant :
- une source de lumière (10), configurée pour émettre un faisceau de lumière autour d'un axe d'illumination ;
- une cavité (40), destinée à recevoir un gaz;
- un détecteur (50), configuré pour détecter une onde acoustique se propageant à travers la cavité ;
le dispositif comportant un substrat (2), s'étendant entre une face inférieure (20) et une face supérieure (30), le substrat étant tel que :
- la cavité est ménagée dans le substrat, entre la face inférieure et la face supérieure ;
- une tranchée (31) est ménagée dans le substrat, délimitée par la face supérieure, la source de lumière étant insérée dans la tranchée, sur la face supérieure, la face supérieure s'étendant ainsi entre la cavité (40) et la source de lumière (10);
- le substrat comporte une portion d'illumination (32), délimitant la tranchée, disposée face à la source de lumière, la portion d'illumination s'étendant entre :
• une face proximale (33), ménagée sur la face supérieure, disposée en regard de la source de lumière ;
• et une face distale (34), ménagée sur la face supérieure, la face distale formant un réflecteur configuré pour réfléchir la lumière vers la cavité ;
de telle sorte que le faisceau de lumière, émis par la source de lumière, se propage, à travers la portion d'illumination, entre la face proximale et la face distale, avant d'être réfléchi, par la face distale, vers la cavité.

2. Dispositif selon la revendication 1, dans lequel la face distale (34) comporte une couche réfléchissante (34₂) formant le réflecteur.

3. Dispositif selon l'une quelconque des revendications précédentes, dans lequel une couche anti-reflet (33₁) est déposée sur la face proximale (33).

4. Dispositif selon l'une quelconque des revendications précédentes dans lequel :
- la face proximale s'étend perpendiculairement à un axe normal proximal (N₁);
- l'axe d'illumination (Δ₁) est incliné par rapport à l'axe normal proximal.

5. Dispositif selon la revendication 4, dans lequel l'axe d'illumination (Δ₁) est incliné par rapport à l'axe normal proximal, d'un angle d'inclinaison (θ₁) compris entre 50° et 60° ou compris entre 3° et 10°.

6. Dispositif selon l'une quelconque des revendications 4 ou 5, dans lequel :
- la face distale (34) s'étend perpendiculairement à un axe normal distal (N₂) ;
- l'axe normal distal (N₂) est sécant de l'axe normal proximal (N₁).

7. Dispositif selon l'une quelconque des revendications précédentes dans lequel :
- la tranchée s'étend jusqu'à un fond ;
- l'axe d'illumination (Δ₁) est parallèle au fond de la tranchée.

8. Dispositif selon la revendication 7, dans lequel la face distale (34) s'étend parallèlement à l'axe d'illumination (Δ₁).

9. Dispositif selon l'une quelconque des revendications 1 à 7, dans lequel :
- le substrat comporte une tranchée auxiliaire (35), délimitée par la face supérieure (30) ;
- la face distale (34) délimite la tranchée auxiliaire ;
- la portion d'illumination (32) s'étend entre la tranchée (31) et la tranchée auxiliaire (35).

10. Dispositif selon l'une quelconque des revendications précédentes dans lequel :
- la cavité est délimitée par une face interne (41) ;
- la face interne comporte une portion d'admission (42), destinée à une admission du faisceau de lumière se propageant vers la cavité à partir de la face distale ;
- la face interne (41) comporte une couche réfléchissante (41₂), en dehors de la portion d'admission.

11. Dispositif selon l'une quelconque des revendications précédentes, dans lequel le détecteur (50) est disposé en contact fluidique avec la cavité (40), entre la face inférieure (20) et la face supérieure (30).

12. Dispositif selon l'une quelconque des revendications précédentes, dans lequel la cavité est reliée à au moins un canal fluidique (45, 46), s'étendant à travers le substrat, pour permettre le remplissage de la cavité par le gaz, et/ou l'évacuation du gaz.

13. Dispositif selon l'une quelconque des revendications précédentes, dans lequel la source de lumière émet dans une bande spectrale d'émission, dans le domaine infra-rouge, le substrat étant formé d'un matériau présentant une transmittance, dans la bande spectrale d'émission, telle qu'au moins 10% de la puissance lumineuse du faisceau de lumière, émis par la source, atteint la cavité après s'être propagée de la face proximale vers la face distale puis de la face distale vers la cavité.

14. Procédé d'analyse d'un gaz à l'aide d'un dispositif (1) selon l'une quelconque des revendications précédentes, le procédé comportant :
a) admission du gaz dans la cavité (40);
b) activation de la source de lumière (10), de telle sorte que la source de lumière émet un faisceau de lumière périodiquement modulé en amplitude ;
c) détection, par le détecteur, d'une variation périodique d'une pression générée dans la cavité par effet photoacoustique ;
le procédé étant tel que le faisceau de lumière, émis par la source de lumière, se propage, à travers le substrat :
- de la face proximale (33) vers la face distale (34) de la portion d'illumination (32) ;
- puis de la face distale (34) vers la cavité (40).

## Patentansprüche

1. Photoakustische Detektionsvorrichtung (1), umfassend:
- eine Lichtquelle (10), die dazu ausgestaltet ist, einen Lichtstrahl um eine Beleuchtungsachse herum zu emittieren;
- einen Hohlraum (40), der dazu bestimmt ist, ein Gas aufzunehmen;
- einen Detektor (50), der dazu ausgestaltet ist, eine akustische Welle zu detektieren, die sich durch den Hohlraum hindurch ausbreitet;
wobei die Vorrichtung ein Substrat (2) umfasst, das sich zwischen einer Unterseite (20) und einer Oberseite (30) erstreckt, wobei das Substrat dergestalt ist, dass:
- der Hohlraum in dem Substrat ausgebildet ist, zwischen der Unterseite und der Oberseite;
- ein Graben (31) in dem Substrat ausgebildet ist, der durch die Oberseite begrenzt wird, wobei die Lichtquelle in den Graben eingesetzt ist, an der Oberseite, wobei sich die Oberseite somit zwischen dem Hohlraum (40) und der Lichtquelle (10) erstreckt;
- das Substrat einen den Graben begrenzenden Beleuchtungsabschnitt (32) umfasst, der gegenüber der Lichtquelle angeordnet ist, wobei sich der Beleuchtungsabschnitt erstreckt zwischen:
• einer proximalen Seite (33), die an der Oberseite ausgebildet ist und der Lichtquelle zugewandt angeordnet ist;
• und einer distalen Seite (34), die an der Oberseite ausgebildet ist, wobei die distale Seite einen Reflektor bildet, der dazu ausgestaltet ist, das Licht zu dem Hohlraum hin zu reflektieren;
so dass sich der von der Lichtquelle emittierte Lichtstrahl durch den Beleuchtungsabschnitt hindurch zwischen der proximalen Seite und der distalen Seite ausbreitet, bevor er von der distalen Seite zu dem Hohlraum hin reflektiert wird.

2. Vorrichtung nach Anspruch 1, bei der die distale Seite (34) eine reflektierende Schicht (34₂) umfasst, die den Reflektor bildet.

3. Vorrichtung nach einem der vorhergehenden Ansprüche, bei der eine Antireflexschicht (33₁) auf die proximale Seite (33) aufgebracht ist.

4. Vorrichtung nach einem der vorhergehenden Ansprüche, bei der:
- die proximale Seite sich senkrecht zu einer proximalen Normalachse (N₁) erstreckt;
- die Beleuchtungsachse (Δ₁) in Bezug auf die proximale Normalachse geneigt ist.

5. Vorrichtung nach Anspruch 4, bei der die Beleuchtungsachse (Δ₁) in Bezug auf die proximale Normalachse um einen Neigungswinkel (θ₁) zwischen 50° und 60° oder zwischen 3° und 10° geneigt ist.

6. Vorrichtung nach einem der Ansprüche 4 oder 5, bei der:
- die distale Seite (34) sich senkrecht zu einer distalen Normalachse (N₂) erstreckt;
- die distale Normalachse (N₂) die proximale Normalachse (N₁) schneidet.

7. Vorrichtung nach einem der vorhergehenden Ansprüche, bei der:
- der Graben sich bis zu einem Boden erstreckt;
- die Beleuchtungsachse (Δ₁) parallel zu dem Boden des Grabens ist.

8. Vorrichtung nach Anspruch 7, bei der sich die distale Seite (34) parallel zu der Beleuchtungsachse (Δ₁) erstreckt.

9. Vorrichtung nach einem der Ansprüche 1 bis 7, bei der:
- das Substrat einen Hilfsgraben (35) umfasst, der durch die Oberseite (30) begrenzt wird;
- die distale Seite (34) den Hilfsgraben begrenzt;
- der Beleuchtungsabschnitt (32) sich zwischen dem Graben (31) und dem Hilfsgraben (35) erstreckt.

10. Vorrichtung nach einem der vorhergehenden Ansprüche, bei der:
- der Hohlraum durch eine Innenseite (41) begrenzt wird;
- die Innenseite einen Einlassabschnitt (42) umfasst, der zu einem Einlassen des Lichtstrahls bestimmt ist, der sich zu dem Hohlraum hin von der distalen Seite aus ausbreitet;
- die Innenseite (41) eine reflektierende Schicht (41₂) umfasst, außerhalb des Einlassabschnitts.

11. Vorrichtung nach einem der vorhergehenden Ansprüche, bei welcher der Detektor (50) in Fluidkontakt mit dem Hohlraum (40) angeordnet ist, zwischen der Unterseite (20) und der Oberseite (30).

12. Vorrichtung nach einem der vorhergehenden Ansprüche, bei welcher der Hohlraum mit mindestens einem Fluidkanal (45, 46) verbunden ist, der sich durch das Substrat hindurch erstreckt, um das Füllen des Hohlraums mit dem Gas und/oder das Abführen des Gases zu ermöglichen.

13. Vorrichtung nach einem der vorhergehenden Ansprüche, bei der die Lichtquelle in einem Emissionsspektralband im Infrarotbereich emittiert, wobei das Substrat aus einem Material gebildet ist, das einen derartigen Transmissionsgrad im Emissionsspektralband aufweist, dass mindestens 10% der Lichtleistung des Lichtstrahls, der von der Quelle emittiert wird, den Hohlraum erreicht, nachdem sie sich von der proximalen Seite zur distalen Seite hin und dann von der distalen Seite zum Hohlraum hin ausgebreitet hat.

14. Verfahren zur Analyse eines Gases mithilfe einer Vorrichtung (1) nach einem der vorhergehenden Ansprüche, wobei das Verfahren umfasst:
a) Einlassen des Gases in den Hohlraum (40);
b) Aktivieren der Lichtquelle (10), so dass die Lichtquelle einen periodisch amplitudenmodulierten Lichtstrahl emittiert;
c) Detektion, durch den Detektor, einer periodischen Änderung eines Drucks, der in dem Hohlraum durch photoakustischen Effekt erzeugt wird;
wobei das Verfahren dergestalt ist, dass der von der Lichtquelle emittierte Lichtstrahl sich durch das Substrat hindurch ausbreitet:
- von der proximalen Seite (33) zur distalen Seite (34) des Beleuchtungsabschnitts (32) hin;
- dann von der distalen Seite (34) zu dem Hohlraum (40) hin.

## Claims

1. Photoacoustic detection device (1), comprising:
- a light source (10), configured to emit a light beam about an illumination axis;
- a cavity (40), intended to receive a gas;
- a detector (50), configured to detect an acoustic wave being propagated through the cavity;
the device comprising a substrate (2), extending between a bottom face (20) and a top face (30), the substrate being such that:
- the cavity is formed in the substrate, between the bottom face and the top face;
- a trench (31) is formed in the substrate, delimited by the top face, the light source being inserted into the trench, on the top face, the top face thus extending between the cavity (40) and the light source (10);
- the substrate comprises an illumination portion (32), delimiting the trench, disposed facing the light source, the illumination portion extending between:
• a proximal face (33), formed on the top face, disposed opposite the light source;
• and a distal face (34), formed on the top face, the distal face forming a reflector configured to reflect the light towards the cavity;
such that the light beam, emitted by the light source, is propagated, through the illumination portion, between the proximal face and the distal face, before being reflected, by the distal face, towards the cavity.

2. Device according to Claim 1, wherein the distal face (34) comprises a reflecting layer (34₂) forming the reflector.

3. Device according to any one of the preceding claims, wherein an antireflection layer (33₁ )is deposited on the proximal face (33).

4. Device according to any one of the preceding claims, wherein:
- the proximal face extends at right angles to a proximal normal axis (N₁);
- the illumination axis (Δ₁) is inclined with respect to the proximal normal axis.

5. Device according to Claim 4, wherein the illumination axis (Δ₁) is inclined with respect to the proximal normal axis, by an angle of inclination (θ₁) of between 50° and 60° or between 3° and 10°.

6. Device according to any one of claims 4 or 5, wherein:
- the distal face (34) extends at right angles to a distal normal axis (N₂);
- the distal normal axis (N₂) is secant to the proximal normal axis (N₁).

7. Device according to any one of the preceding claims, wherein:
- the trench extends to a bottom;
- the illumination axis (Δ₁) is parallel to the bottom of the trench.

8. Device according to Claim 7, wherein the distal face (34) extends parallel to the illumination axis (Δ₁).

9. Device according to any one of Claims 1 to 7, wherein:
- the substrate comprises an auxiliary trench (35), delimited by the top face (30);
- the distal face (34) delimits the auxiliary trench;
- the illumination portion (32) extends between the trench (31) and the auxiliary trench (35).

10. Device according to any one of the preceding claims, wherein:
- the cavity is delimited by an inner face (41);
- the inner face comprises an admission portion (42), intended for an admission of the light beam being propagated towards the cavity from the distal face;
- the inner face (41) comprises a reflecting layer (41₂), outside of the admission portion.

11. Device according to any one of the preceding claims, wherein the detector (50) is disposed in fluidic contact with the cavity (40), between the bottom face (20) and the top face (30).

12. Device according to any one of the preceding claims, wherein the cavity is linked to at least one fluidic channel (45,46), extending through the substrate, to allow the cavity to be filled by the gas, and/or the gas to be discharged.

13. Device according to Claim 1, wherein the light source emits in an emission spectral band, in the infrared range, the substrate being formed by a material exhibiting a transmittance, in the emission spectral band, such that at least 10% of the light power of the light beam, emitted by the source, reaches the cavity after being propagated from the proximal face to the distal face then from the distal face to the cavity.

14. Method for analyzing a gas using a device (1) according to any one of the preceding claims, the method comprising:
a) admission of the gas into the cavity (40);
b) activation of the light source (10), such that the light source emits a periodically amplitude-modulated light beam;
c) detection, by the detector, of a periodic variation of a pressure generated in the cavity by photoacoustic effect;
the method being such that the light beam, emitted by the light source, is propagated, through the substrate:
- from the proximal face (33) to the distal face (34) of the illumination portion (32);
- then from the distal face (34) to the cavity (40).
